# EUROPÄISCHE PATENTANMELDUNG

(11) **EP 0 972 674 A2**
(43) Veröffentlichungstag der Anmeldung: **19.01.2000**
(21) Anmeldenummer: 99110947.1
(22) Anmeldetag: 07.06.1999
(51) Int. Cl.: B60N 2/48

(54) **Fahrzeugsitz mit einer höhenverstellbaren Kopfstütze**

(30) Priorität: 18.07.1998 DE 19832465
(71) Anmelder: Volkswagen Aktiengesellschaft, 38436 Wolfsburg (DE)
(72) Erfinder: Staats, Axel, 38446 Wolfsburg (DE)

(57) **Zusammenfassung**

Die vorliegende Erfindung betrifft einen Fahrzeugsitz (2), insbesondere für ein Kraftfahrzeug, mit einer höhenverstellbaren Kopfstütze (10) sowie mit einer Höhenverstellvorrichtung (16, 18) für die Kopfstütze (10), die bei oder nach einem Verlassen des Sitzes (2) ein selbsttätiges Zurückstehen einer bei oder nach dem Besetzen des Sitzes (2) in eine Betriebsposition bewegten Kopfstütze in eine Ausgangsposition ermöglicht. Während im Stand der Technik die Ausgangsposition stets unten liegt, um die Sicht des Fahrers oder anderer Fahrzeuginsassen zu verbessern, wird erfindungsgemäß vorgeschlagen, daß die Ausgangsposition oberhalb der Betriebsposition liegt, um die Sicherheit der Fahrzeuginsassen auf dem Fahrzeugsitz (2) zu verbessern.

## Beschreibung

Die vorliegende Erfindung betrifft einen Fahrzeugsitz, insbesondere für ein Kraftfahrzeug, mit einer höhenverstellbaren Kopfstütze sowie mit einer Höhenverstellvorrichtung für die Kopfstütze, die bei oder nach einem Verlassen des Sitzes ein selbsttätiges Zurückstellen einer bei oder nach dem Besetzen des Sitzes in eine Betriebsposition bewegten Kopfstütze in eine Ausgangsposition ermöglicht.

Höhenverstellbare Kopfstützen werden seit langem in Fahrzeugsitzen eingebaut, um eine Anpassung der Höhe der Kopfstütze an die Kopfhöhe des jeweiligen Fahrzeuginsassen zu ermöglichen. Bedauerlicherweise wird jedoch aus Unkenntnis der Tatsache, daß eine falsch eingestellte Kopfstütze zu schweren Verletzungen führen kann, oder aus Vergeßlichkeit von vielen Fahrgästen beim Einstieg in ein Fahrzeug die gerade eingestellte Höhe der Kopfstütze in der Regel selbst dann nicht verändert, wenn sie im Hinblick auf die Körpergröße des Fahrzeuginsassen ungeeignet ist. Wie die Auswertung von Unfalldaten gezeigt hat, besteht bei einer zu tief eingestellten Kopfstütze ein besonders hohes Risiko einer folgenschweren Verletzung der Wirbelsäule, während eine zu hoch eingestellte Kopfstütze sehr viel seltener gravierende Unfallfolgen verursacht.

Aus der DE 38 43 624 C2 ist eine Kopfstützeneinstellvorrichtung für Fahrzeugsitze in Kraftfahrzeugen der eingangs genannten Art bereits bekannt, mit der sich die Kopfstützen von unbesetzten Rücksitzen bzw. von einem unbesetzten Beifahrersitz des Kraftfahrzeugs in eine untere Ausgangsstellung absenken lassen, um die Sicht des Fahrers nach hinten bzw. eines hinter dem Beifahrersitz sitzenden Fahrzeuginsassen nach vorne zu verbessern, wenn diese Sitze nicht besetzt sind. Die Einstellvorrichtung umfaßt an den Rücksitzen angebrachte Schalter, die eine Verstellung der Kopfstützen nach oben und unten ermöglichen, sowie einen im Sitzteil des Sitzes montierten Körperdrucksensor, der bei unbesetztem Sitz ein Absenken der Kopfstütze in die tiefste Ruhe- oder Ausgangsposition bewirkt und die Kopfstütze nach dem Besetzen eines Sitzes in die letzte Stopposition bringt, wenn keiner der Schalter betätigt wird. Das heißt, bei der bekannten Einstellvorrichtung wird ohne einen Eingriff des Fahrzeuginsassen die jeweils zuletzt eingestellte Betriebsposition gewählt, in der jedoch die Kopfstütze für einen großen Fahrzeuginsassen viel zu niedrig eingestellt sein kann, zum Beispiel, wenn zuvor ein kleiner Fahrzeuginsasse auf demselben Fahrzeugsitz gesessen und eine für ihn korrekte Höheneinstellung der Kopfstütze vorgenommen hatte.

Ähnliche Probleme treten auch bei Fahrzeugsitzen mit einer höhenverstellbaren Kopfstütze und einer Verstellvorrichtung mit einem manuell oder motorisch antreibbaren Betätigungselement, jedoch ohne Sitzbelegungssensor auf, wie beispielsweise in der DE 36 24 397 A1 beschrieben, wo die Kopfstütze ebenfalls schwere Halswirbelverletzungen verursachen kann, wenn sie zu tief eingestellt ist.

Aus der DE OS 28 47 795 ist es weiter ebenfalls bekannt, eine Kopfstütze selbsttätig abzusenken, wenn ein Fahrgast den entsprechenden Fahrzeugsitz verläßt, um die Einschränkung der Sicht des Fahrers durch die Kopfstütze zu verringern.

Ausgehend hiervon liegt der Erfindung die Aufgabe zugrunde, bei einem Fahrzeugsitz der eingangs genannten Art die Sicherheit der darauf sitzenden Fahrzeuginsassen zu verbessern.

Diese Aufgabe wird erfindungsgemäß dadurch gelöst, daß die Ausgangsposition stets oberhalb der Betriebsposition liegt. Mit anderen Worten wird die Kopfstütze beim Verlassen des Sitzes ausgefahren und nicht wie beim Stand der Technik eingezogen. Dadurch kann erreicht werden, daß die Kopfstütze nie zu tief eingestellt ist, da sie in ihrer oberen Ausgangsstellung bleibt, wenn die Höhenverstellvorrichtung keine automatische Einstellung der Höhe der Kopfstütze zuläßt bzw. vornimmt oder wenn vom Fahrzeuginsassen bei oder nach dem Besetzen des Fahrzeugsitzes keine Höheneinstellung vorgenommen wird. Wenn jedoch eine Höheneinstellung in die für den Fahrzeuginsassen richtige Höhe erfolgt, sorgt das selbsttätige Zurückstellen der Kopfstütze in die Ausgangsposition bei oder nach dem Verlassen des Sitzes dafür, daß ein nachfolgender Fahrzeuginsasse die Kopfstütze wieder in der oberen Ausgangsposition vorfindet, so daß sie in jedem Fall nicht zu tief eingestellt ist, wenn keine Verstellung vorgenommen wird.

Eine erste bevorzugte Erfindungsalternative sieht vor, daß die Höhenverstellvorrichtung nicht nur bei oder nach dem Verlassen des Sitzes eine selbsttätige Höhenverstellung der Kopfstütze zurück in die Ausgangsposition vornimmt, sondern daß die Kopfstütze bei oder nach dem Besetzen des Sitzes auch automatisch abgesenkt wird. Um dies zu erreichen, umfaßt die Höhenversteilvorrichtung vorzugsweise einen Sitzbelegungssensor und einen auf die Kopfstütze einwirkenden Verstellantrieb, der auf ein Signal des Sitzbelegungssensors anspricht und die Kopfstütze beim Besetzen des Sitzes nach unten bewegt. Dieser Verstellantrieb kann zweckmäßig auch dazu verwendet werden, um die Kopfstütze bei oder nach dem Verlassen des Sitzes nach oben in die Ausgangsposition zurückzubewegen.

Eine Einstellung der richtigen Höhe für jeden Fahrzeuginsassen beim Absenken der Kopfstütze in die Betriebsposition erfolgt bevorzugt dadurch, daß die Höhenversteilvorrichtung eine Einrichtung zum Anhalten und/oder Umkehren der Absenkbewegung umfaßt, die durch einen auf dem Sitz sitzenden Fahrzeuginsassen betätigbar ist, beispielsweise mittels eines Schalters oder gegebenenfalls auch durch einen Druck mit dem Kopf nach hinten auf die Kopfstütze, wodurch in gleicher Weise wie durch die Schalterbetätigung ein Versorgungsstromkreis eines vorzugsweise elektromotorisch arbeitenden Verstellantriebs unterbrochen oder ggf. umgekehrt werden kann, um eine etwas zu weit abgesenkte Kopfstütze wieder etwas auszufahren.

Um zu verhindern, daß die Kopfstütze ganz nach unten abgesenkt wird und damit gewöhnlich zu tief eingestellt ist, wenn der Fahrzeuginsasse die Absenkbewegung der Kopfstütze nicht unterbricht, sieht eine weitere vorteilhafte Ausgestaltung der Erfindung vor, daß beim Besetzen des Sitzes die Kopfstütze bis in eine untere Endposition abgesenkt und anschließend wieder nach oben in die Ausgangsposition zurückbewegt wird, wenn der Fahrzeuginsasse die Einrichtung zum Anhalten der Absenkbewegung nicht betätigt.

Alternativ dazu kann die richtige Höhe der Kopfstütze jedoch auch automatisch oder durch Druck auf eine Wahltaste eingestellt werden. Die automatische Höhenverstellung der Kopfstütze in die Betriebsposition kann entweder mit Hilfe eines weiteres Sensors erfolgen, beispielsweise mittels eines in die Kopfstütze integrierten Näherungssensors, oder mittels eines als Drucksensor ausgebildeten Sitzbelegungssensors, der das Gewicht des Fahrzeuginsassen ermittelt, das als Grundlage zur Berechnung eines Verstellwegs für die Kopfstütze dient. In diesem Fall wird die Kopfstütze vorzugsweise um so stärker abgesenkt, je leichter der den sitz besetzende Fahrzeuginsasse ist, wobei der jeweils optimale Verstellweg durch vorherige Messungen an einer Reihe von potentiellen Fahrzeuginsassen ermittelt wird.

Eine zweite bevorzugte Erfindungsalternative sieht einen Fahrzeugsitz mit einer rein mechanisch arbeitenden Höhenverstellvorrichtung vor, die vorzugsweise ein Bedienungselement zum manuellen Absenken der Kopfstütze und mindestens eine auf die Kopfstütze einwirkende Rückstellfeder umfaßt, welche die Kopfstütze beim Verlassen des Sitzes in die Ausgangsposition zurückbewegt.

Um während des Betriebs ein Zurückstellen der Kopfstütze durch die Rückstellfeder in die Ausgangsposition zu verhindern, ist zwischen der Kopfstütze und einem vorzugsweise als Verstellrad ausgebildeten Bedienungselement eine bevorzugt als Richtgesperre ausgebildete Sperrvorrichtung angeordnet.

Zwischen der Kopfstütze und dem Bedienungselement ist zudem eine Kupplung angeordnet, die beim Besetzen des Sitzes eingerückt wird und eine manuelle Verstellung der Kopfstütze durch Betätigung des Bedienungselements gestattet und die beim Verlassen des Sitzes gelöst wird, so daß die gespannte Rückstellfeder die Kopfstütze nach oben in die Ausgangsposition zurückbewegen kann. Die Betätigung der Kupplung erfolgt vorzugsweise mit Hilfe eines im Sitzteil angeordneten Zugbandes, in das beim Besetzen des Sitzes durch das Körpergewicht des Fahrzeuginsassen eine Zugkraft eingeleitet wird, die zum Einrücken der Kupplung ausgenutzt wird.

Um insbesondere bei einem Fahrzeugsitz mit manuell betätigbarer Höhenverstellvorrichtung zu vermeiden, daß bei einer regelmäßigen Benutzung des Fahrzeugsitzes durch denselben Fahrzeuginsassen bei jeder Benutzung eine Höhenverstellung der Kopfstütze aus der Ausgangsposition in die Betriebsposition erforderlich ist, sieht eine weitere bevorzugte Ausgestaltung der Erfindung vor, daß die Höhenverstellvorrichtung eine durch den Fahrzeuginsassen aktivierbare Arretiervorrichtung umfaßt, die in aktiviertem Zustand die selbsttätige Zurückstellung der abgesenkten Kopfstütze bei oder nach dem Verlassen des Sitzes verhindert und diese in der jeweils eingestellten Betriebsposition hält.

Im folgenden wird die Erfindung anhand zweier in der Zeichnung dargestellter Ausführungsbeispiele näher erläutert. Es zeigen:
- Fig. 1:: eine perspektivische Ansicht eines erfindungsgemäßen Fahrzeugsitzes, der eine automatische Höhenverstellvorrichtung mit einem elektromotorischen Verstellantrieb aufweist;
- Fig. 2:: eine teilweise geschnittene Seitenansicht eines anderen erfindungsgemäßen Fahrzeugsitzes, der eine mechanische Höhenverstellvorrichtung mit einer manuell absenkbaren Kopfstütze aufweist;
- Fig. 3:: eine teilweise geschnittene Vorderseitenansicht eines Teils des Fahrzeugsitzes aus Fig. 2 entlang der Linie III-III.

Die in der Zeichnung dargestellten Kraftfahrzeugsitze 2 bestehen im wesentlichen aus einem Sitzteil 4, einer Rückenlehne 6, einer höhenverstellbaren Kopfstütze 10, die von zwei in Führungen 12 innerhalb der Rückenlehne 6 längsverschiebbar geführten Tragstangen 14 getragen wird, sowie einer Höhenverstellvorrichtung 16 bzw. 18 für die Kopfstütze 10.

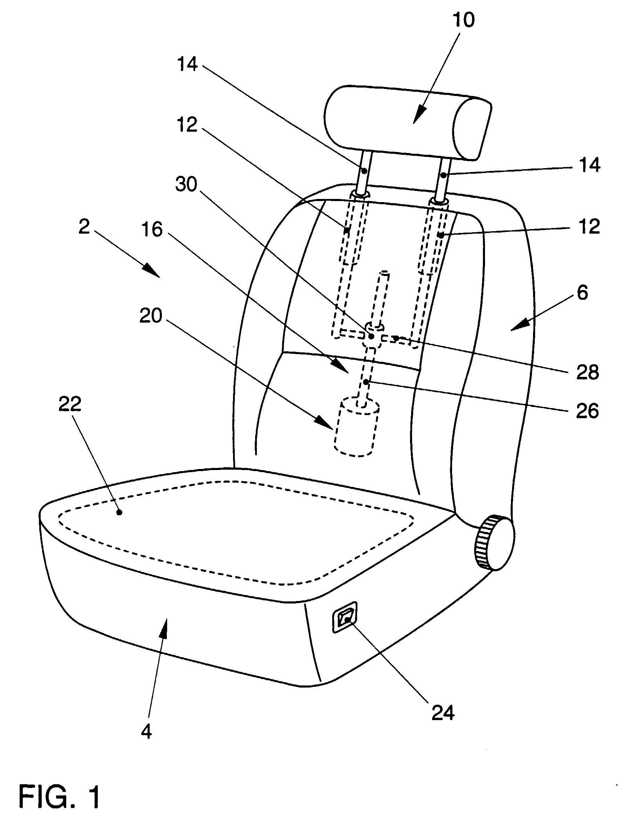

Bei dem in Fig. 1 dargestellten Fahrzeugsitz 2 mit automatischer Höhenverstellung besteht die Höhenverstellvorrichtung 16 im wesentlichen aus einem in der Rückenlehne 6 angeordneten, vom Bordnetz des Kraftfahrzeugs gespeisten elektromotorischen Verstellantrieb 20, einer elektronischen Steuereinheit (nicht dargestellt) zum Ansteuern des Verstellantriebs 20, sowie einem im Sitzteil 4 des Sitzes 2 angeordneten Sitzbelegungssensor 22 und einem an der Seite des Sitzteils 4 angeordneten Kippschalter 24, die elektrisch mit der Steuereinheit verbunden sind.

Der Verstellantrieb 20 besteht aus einem Elektromotor mit einer als Schraubenspindel ausgebildeten Abtriebswelle 26, die eine durch Querholme 28 starr mit den unteren Enden der Tragstangen 14 verbundene Spindelmutter 30 durchsetzt, welche durch die Drehung der Abtriebswelle 22 parallel zu den Führungen 12 verschoben wird und die Kopfstütze 10 je nach Drehrichtung des Elektromotors nach oben oder unten bewegt.

Der Sitzbelegungssensor 22 ist als Foliendrucksensor ausgebildet, der zwischen den Bezug und das Polstermaterial des Sitzteils 4 eingelegt ist. Die elektronische Steuereinheit steuert die Stromzufuhr zum Elektromotor in Abhängigkeit von einem Sitzbelegungssignal des Sitzbelegungssensors 22, wobei die Kopfstütze 10 aus einer oberen Ausgangsstellung abgesenkt wird, wenn der Sitz 2 von einem Fahrzeuginsassen besetzt wird und ein entsprechendes Signal vom Foliendrucksensor von Null aus einen vorgegebenen Schwellenwert übersteigt, während die Kopfstütze 10 nach oben in die Ausgangsposition zurückbewegt wird, wenn der Sitz 2 vom Fahrzeuginsassen verlassen wird und das Signal vom Foliendrucksensor 22 wieder auf Null absinkt. Der als Dreistellungs-Kippschalter ausgebildete Kippschalter 24 unterbricht bei seiner Betätigung je nach Kippstellung die Stromzufuhr zum Elektromotor bzw. kehrt sie um, so daß der auf dem Sitz sitzende Fahrzeuginsasse durch Betätigung des Schalters 24 die Absenkbewegung der Kopfstütze 10 entweder in einer geeigneten Betriebsposition anhalten kann, in der sich die Kopfstütze 10 in der richtigen Höhe hinter seinem Kopf befindet, oder sie wieder etwas nach oben ausfahren kann, falls die Unterbrechung der Stromzufuhr etwas zu spät erfolgt ist.

Innerhalb der Rückenlehne 6 sind weiter zwei Näherungsschalter angeordnet (nicht dargestellt), von denen der obere die Stromzufuhr zum Elektromotor unterbricht, wenn die Kopfstütze 10 beim Ausfahren die Ausgangsposition erreicht. Im Unterschied dazu bewirkt der untere Näherungsschalter eine Umkehr der Stromzufuhr, wenn die Kopfstütze 10 eine unterste Endstellung erreicht, ohne daß der Fahrzeuginsasse den Schalter 24 zum Anhalten der Abwärtsbewegung betätigt hat. In diesem Fall wird die Kopfstütze 10 sofort wieder nach oben ausgefahren, bis der Fahrzeuginsasse den Schalter 24 entweder doch noch betätigt oder schließlich die obere Ausgangsposition erreicht ist. Dadurch kann eine zu tief eingestellte Kopfstütze 10 auch bei Unkenntnis des Fahrzeuginsassen über das Vorhandensein oder die Funktion des Schalters 24 vermieden werden.

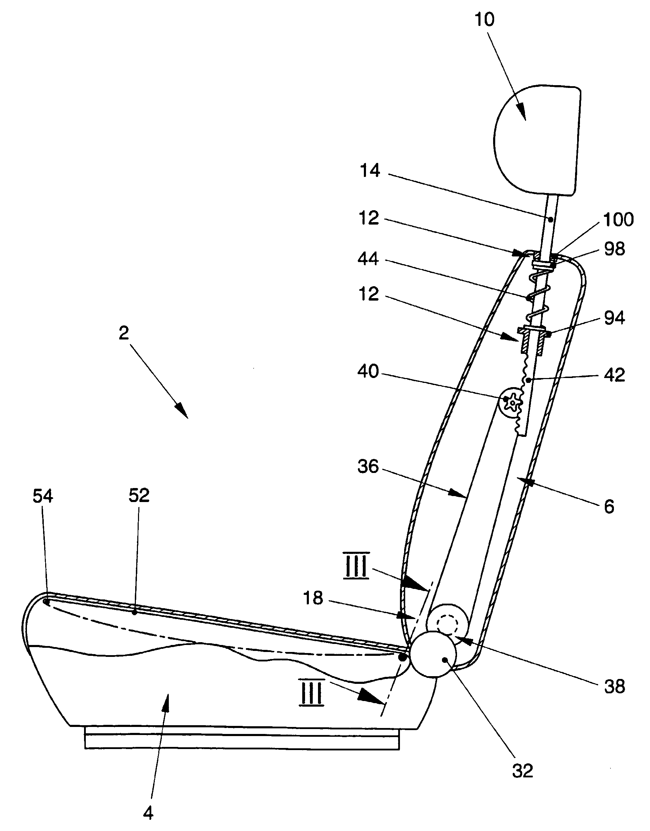

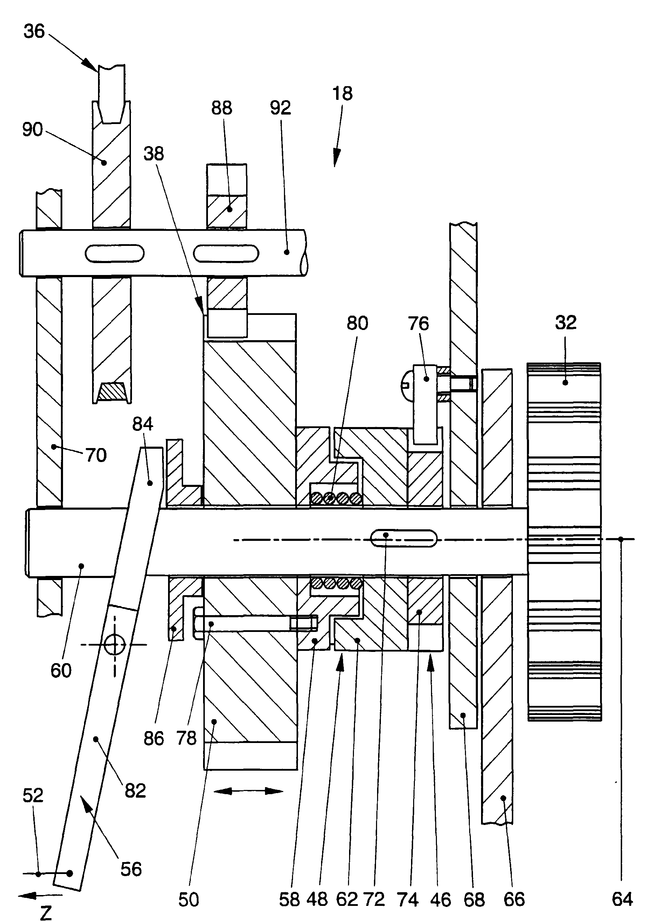

Bei dem in Fig. 2 dargestellten Fahrzeugsitz 2 mit mechanischer Höhenverstellung umfaßt die Höhenverstellvorrichtung 18 ein zwischen der Rückenlehne 6 und dem Sitzteil 4 seitlich am Fahrzeugsitz 2 angeordnetes manuell betätigbares Verstellrad 32, einen innerhalb der Rückenlehne 6 angeordneten, durch Drehen des Verstellrades 32 betätigbaren Riementrieb 36 mit einem dazwischenliegenden Übersetzungsgetriebe 38, zwei durch den Riementrieb 36 angetriebene Zahnräder 40, die jeweils mit einem der als Zahnstangen 42 ausgebildeten unteren Enden der Tragstangen 14 kämmen, sowie zwei die Tragstangen 14 umgebende Rückstellfedern 44 zum Zurückstellen der Kopfstütze 10 in die obere Ausgangsposition. Wie am besten in Fig. 3 dargestellt, umfaßt die Höhenverstellvorrichtung 18 weiter ein zwischen dem Verstellrad 32 und dem Übersetzungsgetriebe 38 angeordnetes Richtgesperre 46, das die Drehung des Verstellrades 32 in einer das Absenken der Kopfstütze 10 bewirkenden Drehrichtung gestattet und in einer das Ausfahren der Kopfstütze 10 bewirkenden Drehrichtung verhindert, eine zwischen dem Richtgesperre 46 und dem Übersetzungsgetriebe 38 angeordnete Klauenkupplung 48, die bei oder nach dem Besetzen des Fahrzeugsitzes 2 durch einen Fahrzeuginsassen eingerückt wird und das Verstellrad 32 drehfest mit einem Antriebszahnrad 50 des Übersetzungsgetriebes 38 verbindet. Die Klauenkupplung 48 wird bei oder nach dem Verlassen des Sitzes 2 ausgerückt, um zum einen die Blockierung des Riementriebs 36 durch das Richtgesperre 46 aufzuheben, so daß die Kopfstütze 10 durch die Rückstellfeder 44 selbsttätig in ihre obere Ausgangsposition zurückgestellt wird, und um zum anderen zu verhindern, daß sich das Verstellrad 32 beim Zurückstellen der Kopfstütze 10 in die Ausgangsposition mitdreht. Zum Ausrücken der Kupplung 48 dient ein im Sitzteil 4 zwischen dem Bezug und dem Polstermaterial angeordnetes Zugband 52 (Fig. 2), dessen vorderes Ende starr mit einem Rahmenteil 54 des Sitzpolsters verbunden ist und dessen hinteres Ende mit einem Gabelhebel 56 verbunden ist, der eine verschiebbare Kupplungshälfte 58 der Klauenkupplung 48 bei einem Zug (Pfeil Z in Fig. 3) im Zugband 52 auf einer Drehwelle 60 axial in Richtung einer festen Kupplungshälfte 62 der Klauenkupplung 48 verschiebt und mit dieser in Eingriff bringt.

Das zur Schwenkachse 64 eines Schwenkgelenks zwischen der Rückenlehne 6 und dem Sitzteil 4 koaxiale Verstellrad 32 befindet sich auf der Seite des Sitzes 2, die zu einem Verstellrad für die Lehnenneigung (nicht dargestellt) entgegengesetzt ist. Das Verstellrad 32 ist am freien äußeren Ende der Drehwelle 60 befestigt, die in einer Seitenwange 66 des Sitzteils 4 und in zwei Rahmenteilen 68, 70 der Rückenlehne 6 drehbar gelagert ist.

Das innerhalb der Rückenlehne 6 angeordnete Richtgesperre 46 umfaßt ein mittels einer Keilverbindung 72 drehfest auf der Drehwelle 60 befestigtes Sperrrad 74 und eine schwenkbar am Lehnenteil 68 gelagerte Sperrklinke 76, die durch eine Sperrfeder (nicht dargestellt) im Eingriff mit dem Sperrrad 74 gehalten wird.

Die Klauenkupplung 48 ist zwischen dem Sperrrad 74 des Richtgesperres 46 und dem Antriebszahnrad 50 des Übersetzungsgetriebes 38 auf der Drehwelle 60 angeordnet, wobei die feste Kupplungshälfte 62 durch die Keilverbindung 72 fest mit der Drehwelle 60 verbunden ist, während die verschiebbare Kupplungshälfte 58 zusammen mit dem durch Schrauben 78 mit der Kupplungshälfte 58 verbundenen Antriebszahnrad 50 axial auf der Drehwelle 60 verschiebbar ist.

Eine Schraubendruckfeder 80 innerhalb der Klauenkupplung 48 zwischen der festen und der verschiebbaren Kupplungshälfte 62 bzw. 58 drückt die verschiebbare Kupplungshälfte 58 und die feste Kupplungshälfte 62 auseinander, während das Zugband 52 die beiden Kupplungshälften 58, 60 entgegen der Kraft der Feder 80 zusammendrückt, wenn es beim Besetzen des Sitzes 2 durch das Gewicht des Fahrzeuginsassen bogenförmig nach unten verformt wird (in Fig. 2 in strichpunktierten Linien dargestellt). Durch die Verformung des Zugbandes 52 verschiebt sich sein hinteres, über Umlenkrollen (nicht dargestellt) zum Gabelhebel 56 geführtes Ende, wodurch der Gabelhebel 56 durch den Zug am längeren Hebelarm 82 in Richtung des Pfeils Z in die in Fig. 3 dargestellte Position verschwenkt wird. Dadurch drückt der kürzere Gabelarm 84 des Gabelhebels 56 über ein auf der Welle 60 verschiebbares Druckstück 86 das Antriebszahnrad 50 entgegen der Kraft der Schraubendruckfeder 80 in Richtung des Verstellrades 32, so daß die beiden Kupplungshälften 58, 60 in Kupplungseingriff treten.

Beim Verlassen des Sitzes 2 wird das Zugband 52 entlastet und kehrt durch die elastische Rückverformung des Polstermaterials und die Rückstellkraft der Schraubendruckfeder 80 in seine geradlinige Ausgangslage zurück. Aufgrund der Entlastung der Zugkraft Z im Zugband 52 drückt die Schraubendruckfeder 80 die beiden Kupplungshälften 58, 62 auseinander und rückt damit die Kupplung zwischen dem Verstellrad 32 und dem Richtgesperre 46 einerseits und dem Übersetzungsgetriebe 38 und dem Riementrieb 36 andererseits aus.

Die Breite des Antriebszahnrades 50 ist so gewählt, daß es unabhängig von seiner axialen Position auf der Drehwelle 60 stets im Zahneingriff mit einem Abtriebsritzel 88 des Übersetzungsgetriebes 38 bleibt, das zusammen mit einer unteren Riemenscheibe 90 des Riementriebs 36 auf einer zur Drehwelle 60 parallelen zweiten drehbaren Welle 92 befestigt ist.

Wie am besten in Fig. 2 dargestellt, sind die beiden Rückstellfedern 44 zum Zurückstellen der Kopfstütze 10 in die obere Ausgangsposition zwischen einer oberen Ringschulter 94 einer unteren Führungshülse 96 für die Tragstangen 14 und einer unteren Ringschulter einer auf der jeweiligen Tragstange 14 befestigten Haltescheibe 98 angeordnet, die gleichzeitig als Anschlag dient und durch Anschlagen gegen eine obere Führungshülse 100 in der Rückenlehne 6 die Aufwärtsbewegung der Kopfstütze 10 in der Ausgangsposition anhält. Um zu verhindern, daß bei einer regelmäßigen Benutzung des Fahrzeugsitzes 2 durch denselben Fahrzeuginsassen bei jeder Benutzung eine Neueinstellung der Betriebsposition erfolgen muß, kann die Klauenkupplung 48 in der eingerückten Stellung blockiert werden, beispielsweise mittels eines Druckknopfs, der in der Mitte des Verstellrades 32 angeordnet ist und bei seiner Betätigung über ein in der hohlen Welle 60 längsverschiebbar geführtes und aus der Welle 60 austretendes Sperrelement eine Axialverschiebung der verschiebbaren Kupplungshälfte 58 aus dem Eingriff mit der festen Kupplungshälfte 60 blockiert (nicht dargestellt). Die Anordnung ist zweckmäßig so gewählt, daß das durch Betätigung des Druckknopfs verschobene Sperrelement bei einer Drehung des Verstellrades 32 automatisch zurück in seine Ausgangsstellung bewegt wird.

Das Übersetzungsverhältnis des Übersetzungsgetriebes 38 und des Riementriebs 36 ist zweckmäßig so gewählt, daß die Kopfstütze 10 durch eine Umdrehung des Verstellrades 32 aus ihrer Ausgangsposition nach unten in ihrer unterste Betriebsposition bewegt wird.

## Patentansprüche

1. Fahrzeugsitz, insbesondere für ein Kraftfahrzeug, mit einer höhenverstellbaren Kopfstütze sowie mit einer Höhenverstellvorrichtung für die Kopfstütze, die bei oder nach einem Verlassen des Sitzes ein selbsttätiges Zurückstellen einer bei oder nach dem Besetzen des Sitzes in eine Betriebsposition bewegten Kopfstütze in eine Ausgangsposition ermöglicht, **dadurch gekennzeichnet**, daß die Ausgangsposition oberhalb der Betriebsposition liegt.

2. Fahrzeugsitz nach Anspruch 1, **dadurch gekennzeichnet**, daß die Höhenverstellvorrichtung (16) die Kopfstütze (10) beim Besetzen des Sitzes (2) automatisch absenkt.

3. Fahrzeugsitz nach Anspruch 1 oder 2, **dadurch gekennzeichnet**, daß die Höhenverstellvorrichtung (16) einen Sitzbelegungssensor (22) umfaßt.

4. Fahrzeugsitz nach Anspruch 3, **dadurch gekennzeichnet**, daß der Sitzbelegungssensor ein Drucksensor (22) ist.

5. Fahrzeugsitz nach einem der Ansprüche 1 bis 4, **dadurch gekennzeichnet**, daß die Höhenverstellvorrichtung (16) einen auf die Kopfstütze (10) einwirkenden Verstellantrieb (20) umfaßt.

6. Fahrzeugsitz nach Anspruch 5, **dadurch gekennzeichnet**, daß der Verstellantrieb (20) auf ein Signal des Sitzbelegungssensors (22) anspricht und die Kopfstütze (10) beim Besetzen des Sitzes (2) absenkt und beim Verlassen des Sitzes (2) nach oben in die Ausgangsposition zurückbewegt.

7. Fahrzeugsitz nach Anspruch 6, **dadurch gekennzeichnet**, daß beim Besetzen des Sitzes (2) der Verstellantrieb (20) die Kopfstütze (10) ohne einen Eingriff des Fahrzeuginsassen bis in eine untere Endposition absenkt und anschließend wieder nach oben in die Ausgangsposition zurückbewegt.

8. Fahrzeugsitz nach Anspruch 6 oder 7, **dadurch gekennzeichnet**, daß die Höhenverstellvorrichtung (16) eine Einrichtung (24) zum Anhalten und/oder Umkehren der Absenkbewegung umfaßt, die durch einen den Sitz besetzenden Fahrzeuginsassen betätigbar ist.

9. Fahrzeugsitz nach Anspruch 5, **dadurch gekennzeichnet**, daß der Verstellantrieb (20) die Kopfstütze (10) in einem Verhältnis absenkt, das etwa umgekehrt proportional zum Gewicht eines den Sitz besetzenden Fahrzeuginsassen ist.

10. Fahrzeugsitz nach Anspruch 1, **dadurch gekennzeichnet**, daß die Höhenverstellvorrichtung (18) ein Bedienungselement (32) zum manuellen Absenken der Kopfstütze (10) umfaßt.

11. Fahrzeugsitz nach Anspruch 10, **dadurch gekennzeichnet**, daß das Bedienungselement als Verstellrad (32) ausgebildet und im Bereich eines Schwenkgelenks zwischen einem Sitzteil (4) und einer Rückenlehne (6) des Fahrzeugsitzes (2) seitlich am Fahrzeugsitz (2) angeordnet ist.

12. Fahrzeugsitz nach Anspruch 10 oder 11, **dadurch gekennzeichnet**, daß die Höhenverstellvorrichtung (18) mindestens eine auf die Kopfstütze (10) einwirkende Rückstellfeder (44) umfaßt.

13. Fahrzeugsitz nach einem der Ansprüche 10 bis 12, **dadurch gekennzeichnet**, daß die Höhenverstellvorrichtung (18) ein zwischen dem Bedienungselement (32) und der Kopfstütze (10) angeordnetes Sperrelement (46) umfaßt, das ein selbsttätiges Zurückstellen der Kopfstütze (10) in die Ausgangsposition vor dem Verlassen des Sitzes (2) verhindert.

14. Fahrzeugsitz nach Anspruch 13, **dadurch gekennzeichnet**, daß die Höhenverstellvorrichtung (18) eine Kupplung (48) umfaßt, die beim Verlassen des Sitzes (2) ausgerückt wird und ein Zurückstellen der Kopfstütze (10) durch die Rückstellfeder (10) in die obere Ausgangsposition bewirkt.

15. Fahrzeugsitz nach Anspruch 14, **dadurch gekennzeichnet**, daß die Kupplung (48) zwischen dem Bedienungselement (32) und dem Sperrelement (46) einerseits und einem Antriebszug (38, 36) der Kopfstütze (10) andererseits angeordnet ist.

16. Fahrzeugsitz nach Anspruch 14 oder 15, **dadurch gekennzeichnet**, daß die Kupplung durch ein in einem Sitzteil (4) oder in einer Rückenlehne (6) des Sitzes (2) gespanntes Zugelement (52) ausgerückt wird, dessen mit der Kupplung (48) verbundenes Ende beim Besetzen des Sitzes (2) durch einen Fahrzeuginsassen oder beim Anlehnen desselben gegen die Rückenlehne (6) einer Längsverschiebung unterliegt.

17. Fahrzeugsitz nach einem der Ansprüche 13 bis 16, **dadurch gekennzeichnet**, daß das Sperrelement ein Richtgesperre (46) ist.

18. Fahrzeugsitz nach einem der Ansprüche 10 bis 17, **dadurch gekennzeichnet**, daß die Höhenverstellvorrichtung (18) ein Übersetzungsgetriebe (38) umfaßt.

19. Fahrzeugsitz nach einem der Ansprüche 10 bis 18, **dadurch gekennzeichnet**, daß die Höhenverstellvorrichtung (18) eine durch einen Fahrzeuginsassen aktivierbare Arretiervorrichtung umfaßt, die in aktiviertem Zustand die selbsttätige Zurückstellung der abgesenkten Kopfstütze bei oder nach dem Verlassen des Sitzes verhindert.

20. Fahrzeugsitz nach Anspruch 19, **dadurch gekennzeichnet**, daß die Arretiervorrichtung durch Betätigung des Bedienungselements entriegelbar ist.

21. Kraftfahrzeug mit einem Fahrzeugsitz nach einem der vorangehenden Ansprüche.
